# EUROPEAN PATENT SPECIFICATION

(11) **EP 1 750 422 B1**
(45) Date of publication and mention of the grant of the patent: **17.06.2009**
(21) Application number: 05107150.4
(22) Date of filing: 03.08.2005
(51) Int. Cl.: H04M 1/663, H04M 1/2745

(54) **System and method of modifying communications policy settings in a wireless network**
System und Verfahren zur Änderung von Kommunikationsregeleinstellungen in einem drahtlosen Netzwerk
Système et procédé de modification des configurations de la politique de communication dans un réseau sans fil

(43) Date of publication of application: 07.02.2007
(60) Divisional application: 08150334.4
(73) Proprietor: Research In Motion Limited, Waterloo, Ontario N2L 3W8 (CA)
(72) Inventor: Plumb, Marc, N2L 5Z5, Waterloo, (CA); Patterson, Ian Michael, N0B 2H0, Petersburg, (CA); Goggin, Seán Arthur Daniel Carlos, N2L 2C8, Waterloo, (CA)
(74) Representative: Rickard, David John

(56) References cited:
- EP-A- 1 505 807
- WO-A-20/05060223
- US-A- 5 815 808
- US-A1- 2001 051 534
- US-A1- 2004 264 656
- US-A1- 2005 129 206
- US-B1- 6 289 084
- US-B1- 6 701 160

## Description

The present invention relates generally to wireless telecommunication and more particularly to a system and method for modifying communications policy in a wireless network.

Mobile telephonic devices ("cell-phones") capable of wireless communications are increasingly commonplace. Cell-phones typically integrate a variety of functionality into a single device, but the ability to carry out voice telecommunications remains central to the devices' purpose. Nokia of Keilalahdentie 2-4, Finland and Motorola Inc. of Schaumburg, Illinois, U.S.A. are two examples of manufacturers of such cell-phones, and each offer a variety of products in this category.

A typical cell-phone contains a communications interface for establishing wireless communications with telephony networks ("wireless networks"). In addition, a typical cell-phone also has a microcomputer which controls most of the functionality of the cell-phone and aids in processing of information that the cell-phone is presented with.

As part of its functionality, a cell-phone is called upon to establish communications with the wireless networks by accessing different network base stations as the user of the cell-phone roams through different geographic regions served by these base stations. Accordingly, a cell-phone is able to establish communications with other communications devices through the wireless network, allowing the cell-phone to place calls to and to receive calls from these other devices.

As the volume of communications in wireless networks grows, so does the volume of unwanted and unsolicited communications. These communications usually originate from mass marketing sources, but can be from other entities as well. Unwanted calls, in addition to being inconvenient, can be costly as well. For example, long distance marketing calls, which due to the cost structure of Voice over IP have now become more feasible, are costly since, typically, cell-phone owners pay long distance charges for long distance calls received as well as placed.

There has been at least one attempt to devise a scheme for blocking unwanted calls. Specifically, an internet marketing brochure (http://www.hackcanada.com/canadian/phreaking/bcpsl.html) discloses a call blocking service allowing the called party to divert up to twelve telephone numbers of their choice to a special recording that tells callers that the party they have reached has chosen not to take their call at this time. Numbers on the list can be altered by the subscriber at any time. This attempt, however, has several limitations. First of all, each subscriber's blocking list must be manually updated by each subscriber individually. Moreover, only a small number of calling numbers can be blocked. Finally, the call is diverted to a voice mail, which verifies the existence of that phone number to the caller. Bypassing this scheme, therefore, is relatively straightforward: if the initial attempt at placing an unwanted call is frustrated, the unwanted caller simply has to repeat the call using a new originating number. Given the limited number of phone numbers that can be blocked, and the manual nature of updating these by each subscriber, after several attempts, the caller is likely to reach most of the subscribers using this service. Moreover, according to this scheme, the caller's initial efforts are not altogether fruitless since even the diverted calls serve to verify the existence of a subscriber's phone number because of the voice mail.

US5815808 discloses a screening method for a location-based mobile telephone communications system. Screening lists for a specific location within a mobile telecommunications network are assigned to a mobile subscriber. The screening lists consist of allowed directory numbers consisting of both originating and terminating calls. The screening lists are stored at the mobile switching centers of the network. As screening lists are stored only at the mobile switching centers, roaming mobile subscribers must contend with the possibility that not all mobile switching centers will operate with screening lists.

US6701160 discloses a mobile telecommunications device and associated method to locally block selected incoming calls at the communication device. An incoming call source identifier received on the communication device is compared with identifiers on various lists stored in the memory of the device to decide if the call should be accepted or rejected. The lists are either fixed-type or user-selectable. The fixed lists common to a fleet of communication devices are not updatable by the user and are embedded into the device upon manufacture. The user cannot override or update the fixed lists and this may lead to user frustration and/or dissatisfaction.

US2005/129206 discloses a method for screening and routing incoming telephone calls to a mobile device. The method includes extracting caller identification information from an incoming telephone call, providing a plurality of tables including a block call table, and blocking the incoming caller if the caller identification is present in the block call table. A user of a mobile device can individually tailor preference tables to suit user requirements. However, it is not possible to share preference tables with multiple users to create common preference tables.

US2001/051534 discloses a wireless communication device with call screening. Individual screening lists that specify call handling are located on each wireless communication device. A subscriber updates his or her screening list via personal computer and then transmits via a communication network the updated screening list to a message center. The message center sends the updated screening list to the wireless communication device via a wireless connection. However, there is an absence of a common policy between multiple wireless communication devices.

US6289084 discloses a personal telecommunication call screening and alerting system and method. In various embodiments, the call screening and alerting utilizes a personalized affinity database stored on the network or user communication device. The affinity database is automatically updated based upon individual user calling behaviours and patterns. There is no ability for the user implement or download common screening lists shared among multiple users.

EP1505807 discloses a telephone control system and method that selectively rejects unwanted incoming telephone calls. One embodiment focuses on detecting an elapsed period of time between rings in an incoming call. If the time is below a certain threshold, a database is automatically updated with the telephone number of the incoming call, the telephone number being extracted from the caller-id string associated with the call. Thereafter, future calls with the corresponding telephone number are automatically rejected. The central server does not allow the call to pass through to the telephone if the incoming telephone number is on an "unwanted" list, and thus the call can never be received at the telephone should the subscriber so choose. While the subscriber can "delete" phone numbers from the unwanted list, the subscriber cannot override a common policy.

### GENERAL

Preferably the present invention provides a novel system and method for secure access that obviates or mitigates at least one of the above-identified disadvantages of the prior art.

According to an aspect of the invention, there is preferably provided a method of processing communications in a network having a plurality of subscriber devices; said method comprising the steps of: maintaining at one or more network devices a policy common to all subscriber devices; said policy comprising at least one identifier representing whether reception of a voice call having at least one originator identifier is permissible; maintaining, in at least one of said subscriber devices a local override policy that is unique to said at least one of said subscriber devices; receiving a voice call at said at least one of said subscriber devices; said voice call having an originator identifier; accessing said common policy by said at least one of said subscriber devices; accessing said local override policy as maintained in said at least one of said subscriber devices; determining a permissibility, on the said at least one of said subscriber devices, as to whether said voice call is permissible according to said common policy and said local override policy based on said originator identifier of the received voice call; and accepting or rejecting said received voice call according to said permissibility.

The determining step may comprise the steps of: determining whether it is permissible to accept said voice call based on said common policy and said originator identifier of the received voice call; and altering said permissibility according to said override policy.

In the method, the local override policy is updated by: accessing said common policy at one of said subscriber devices; said common policy having at least one identifier such that reception by any of said plurality of subscriber devices of a voice call having one of said at least one identifier is impermissible; marking at least one of said at least one identifier from said common policy; and updating said override policy associated with said one subscriber device according to said marked at least one identifier.

Another aspect of the invention preferably provides a wireless subscriber device for a communications network having a plurality of subscriber devices; said device comprising: an interface operable to send and receive communications; a computer connected to said interface for accessing a policy maintained at one or more network devices; said policy common to said plurality of subscriber devices; said policy defining at least one originating identifier from which said computer can determine whether it is permissible for said subscriber device to accept communications; and storage for maintaining a local override policy; said local override policy for overriding at least a portion of said policy; said computer also connected to said storage; said computer configured to access said policy and said local override policy and to receive an originating identifier of a communication from said interface; said computer permitting said interface to communicate in accordance with said policy and said local override policy based on said originator identifier of the communication.

### BRIEF DESCRIPTION OF THE DRAWINGS

The invention will now be described by way of example only, and with reference to the accompanying drawings, in which:
Figure 1 is a block diagram of a system for modifying communication policy in accordance with an embodiment of the invention;
Figure 2 is a block diagram of the mobile subscriber device of Figure 1;
Figure 3 is a block diagram of certain internal components of a mobile electronic device of Figure 1;
Figure 4 is a flowchart depicting a method of processing communications;
Figure 5 is a block diagram of a system for modifying communication policy in accordance with another embodiment of the invention; and
Figure 6 is a flowchart depicting a method of processing communications in accordance with another embodiment of the invention;
Figure 7 is a flowchart depicting a method of updating information; and
Figure 8 is a flowchart depicting a method of updating information in accordance with an embodiment of the invention.

### DESCRIPTION OF PREFERRED EMBODIMENTS

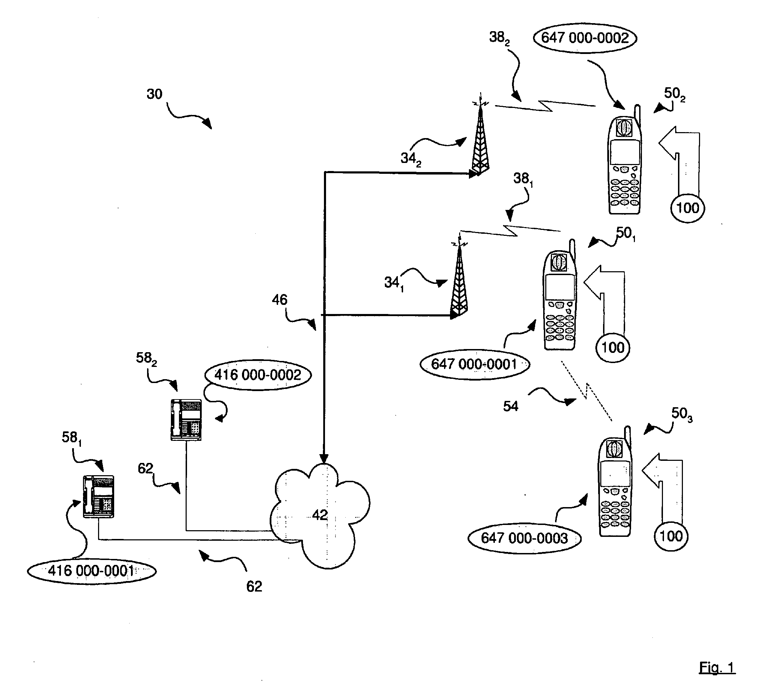

Referring now to Figure 1, a wireless communication system in accordance with a first embodiment of the invention is indicated generally at 30. System 30 comprises a plurality of base stations 34 operable to wirelessly transmit across a variety of geographic ranges. Base stations 34 communicate wirelessly over a plurality of links 38. In a present embodiment, links 38 are based on a known voice-based wireless telecommunication such as Global System for Mobile Communications ("GSM") or Advanced Mobile Phone System ("AMPS").

In system 30, base stations 34 are also connected to a network 42 through a connection 46. In this embodiment, network 42 is the public switched telephone network ("PSTN") but, in other embodiments, other types of networks can be employed.
Moreover, in this embodiment connection 46 is a fibre-optic wire connection, but in other embodiments connection 46 can be other types of connections such as copper wires or a satellite connection.

System 30 also includes a plurality of subscriber devices 50. In this embodiment, a subscriber device 50 is a cell-phone such as those manufactured by Nokia of Keilalahdentie 2-4, Finland and Motorola Inc. of Schaumburg, Illinois, U.S.A., but in other embodiments it could have a cell phone and other enhanced functions such as those manufactured by Research In Motion Limited of Waterloo, Ontario, Canada, or by PalmOne, Inc. of Milpitas, California USA. Cell-phones 50 are operable to connect to network 42 via a base station 34's link 38 each time cell-phone 50 is located within a range respective to that access station 34. For example, whenever device 50₁ is located within the range of base station 34₁, device 50₁ can connect to network 42 by linking with base station 34₁ through link 38₁, and whenever device 50₂ is located within the range of base station 34₂, device 50₂ can connect to network 42 by linking with station 34₂ through link 38₂. Cell-phones 50 can also communicate with each other directly, without the need for a base station, through a peer-to-peer link 54. In this embodiment, a peer-to-peer link consists of a peer-to-peer IEEE 801.11b/g connection employing voice over IP protocol, but in other embodiments other types of peer-to-peer connections such as infrared and cross-linked wired Ethernet connections could also be used. These and other types of peer-to-peer connections are within the scope of the invention.

System 30 also includes phones 58 connected to network 42 through connections 62. Phone 58 is operable to place and receive phone calls through network 42. In other embodiments, phones 58 could represent multiple phones being operated as a call center from which calls are being placed.

Each call originated by a device carries an originator identifier "(OID"), regardless of whether the call is placed through network 42, a base station 34, or through link 54 in a peer-to-peer mode. In this embodiment, an OID is the phone number assigned to each originator phone 58 or cell-phone 50. However, other types of identifiers such as the name under which a phone 58 is registered or a serial number assigned to a cell-phone by the manufacturer can also be used as OIDs, and such variations are within the scope of this invention.

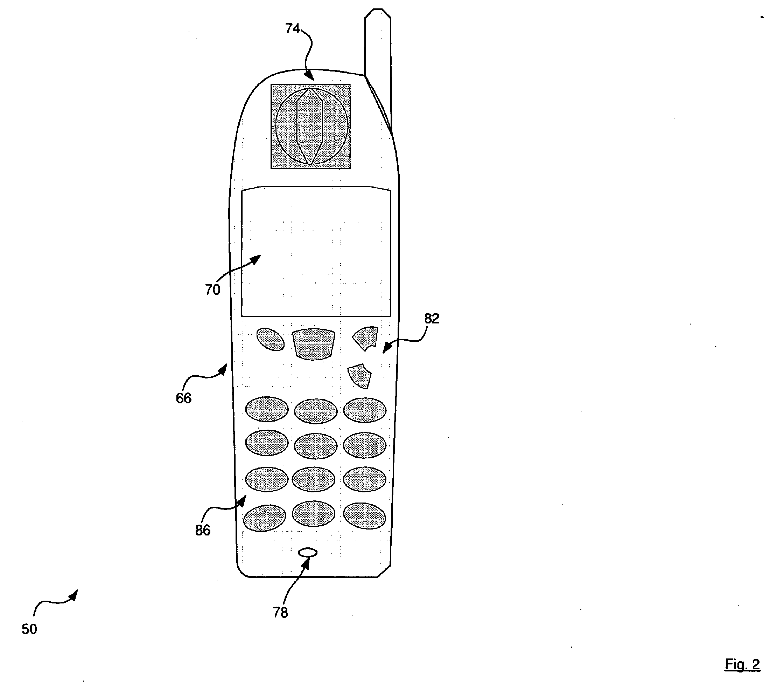

Referring now to Figure 2, cell-phone 50 is shown in greater detail. Cell-phone 50 is based on a computing environment with wireless voice telephony capabilities. (However, it is to be understood that cell-phone 50 can be based on the construction and functionality of any mobile electronic device that can be connected to a wireless network as well. Such devices include personal digital assistants or laptops computers connected to wireless networks. In a present embodiment, a cell-phone 50 includes, a housing 66, which frames an LCD display 70, a speaker 74, a microphone 78, scroll buttons 82, and a keyboard 86. It will be understood that housing 66, can be made from any suitable material as will occur to those of skill in the art.)

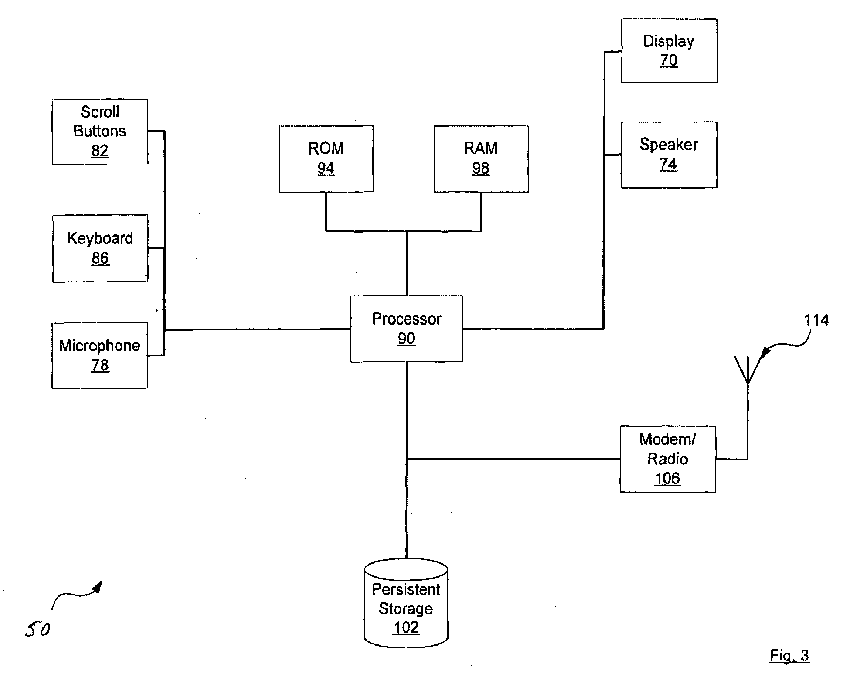

Referring now to Figure 3, a block diagram of certain internal components within cell-phone 50 are shown. Cell-phone 50 is based on a microcomputer that includes a processor 90. Processor 90 is connected to a read-only-memory ("ROM") 94, which contains a plurality of applications executable by processor 90 that enables cell-phone 50 to perform certain functions. Processor 90 is also connected to a random access memory unit ("RAM") 98 and a persistent storage device 102 which is responsible for various non-volatile storage functions of cell-phone 50. Processor 90 can send output signals to various output devices including display 70 and speaker 74. Processor 90 can also receive input from various input devices including microphone 78 and keyboard 86. Processor 90 is also connected to a modem and radio 106. Modem and radio 106 are operable to connect cell-phone 50 to wireless base stations 34 in range of cell-phone 50, in the usual manner, via an antenna 114.

[0021] Referring back to Figure 1, each cell-phone 50 maintains a common policy ("CP") database 100, used for determining which received calls should be accepted. CP database 100 is the same for all cell-phones 50. Table I shows an example CP database 100 for cell-phones 50 right before an attempt is made, by phone 58₁, to place a call.

**Table I**

| **Example CP Database 100** |
|---|
| **Field 1** |
| **OID** |
| 416 000-0002 |
| 647 000-0002 |

Describing Table I in greater detail, Field 1 contains the unique OID associated with a phone or a cell-phone. In this embodiment, as mentioned above, the OID is the phone number associated with a phone or a cell-phone. It is impermissible for cell-phones 50 to receive calls from phones or cell-phones listed in this table. For example, in this case, it is impermissible for cell-phones 50 to accept calls placed by phone 58₂ (which has an OID of 416 000-0002), or by cell-phone 50₂ (which has an OID of 647 000-0002).

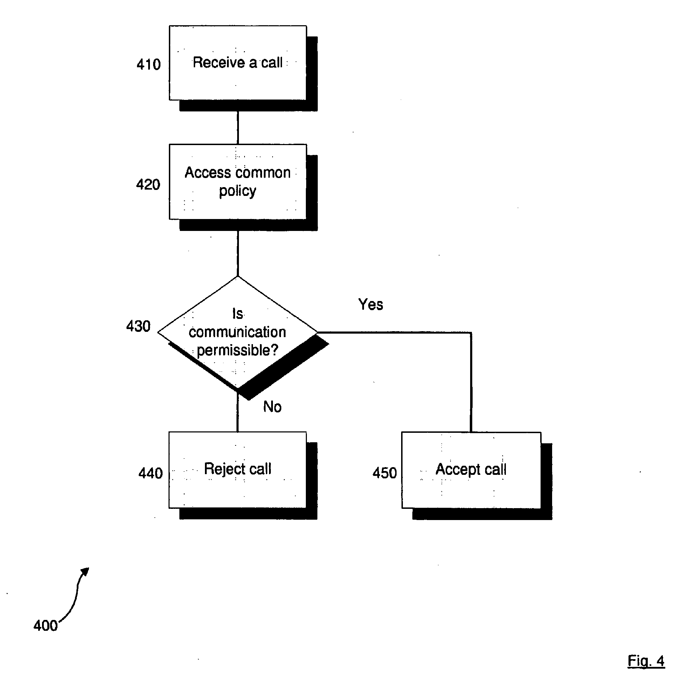

Referring to Figure 4, a method for processing communications in a network having CP database 100 is indicated generally at 400. In order to assist in the explanation of the method, it will be assumed that method 400 is operated using system 30, and that, as shown in Figure 1, cell-phone 50₁ is located within range of station 38₁, cell-phone 50₂ is located within in range of station 38₂ and cell-phone 50₃ is located within peer-to-peer range of cell-phone 50₁. Furthermore, the following discussion of method 400 will lead to further understanding of system 30 and its various components. (However, it is to be understood that system 30 and/or method 400 can be varied, and need not work exactly as discussed herein in conjunction with each other).

The current performance of method 400 is initiated by a call placed by phone 58a₁. Referring back to Figure 4, at step 410 a call is received. Step 410 can be performed, for example, by phone 58₁ dialling the phone number for cell-phone 50₁. Accordingly, an attempt is made, in the usual manner, to create a connection with cell-phone 50₁ through PSTN network 42, and, with the aid of station 34₁, through link 38₁. In the present embodiment, the phone number of phone 58₁, 416 000-0001, is forwarded to cell-phone 50₁ as part of the attempt to establish a connection. In other embodiments, other identifiers which uniquely identify the originator of a call in a phone network, such as the name under which a phone is registered, can also be used.

Continuing with the example, at step 420 the common communication policy is accessed. In this example, step 420 is performed by accessing CP database 100 maintained on cell-phone 50₁ itself, as described above. Method 400 then advances from step 420 to step 430, at which point a determination is made as to whether the received communication is permissible. In this example, CP database 100 is examined to determine whether calls from 58₁ are permitted. To perform this step, CP database 100 is accessed to determine whether the phone number of phone 58₁, the originator phone, is present in CP database 100. In this case, the phone number 416 000-0001 is not present in CP database 100 meaning that accepting a phone call from phone 58₁ is permissible. Accordingly, step 450 is performed next, and the call is accepted in the usual manner. For example, cell-phone 50₁'s ringer can be sounded if cell-phone 50₁ is on, or the call can be directed to a voice mail if cell-phone 50₁ is off.

To further illustrate method 400, it is assumed that method 400 is performed by system 30 a second time, but in this second performance, the phone call initiating the performance of method 400 originates from phone 58₂. Accordingly, at step 410.the phone number 416 000-0002, which is associated with phone 58₂, is transmitted to cell-phone 50₁ as part of the attempt to establish a connection with phone 50₁. At step 410, CP database 100 is accessed in substantially the same manner as the first performance of method 400. However, during the second performance of step 430, accessing CP database 100 reveals that phone number 416 000-0002 is present in CP database 100. Accordingly, step 440 is performed next, rejecting the call placed by phone 58₂. Step 440 can be performed in a variety of known ways. For example, the connection can be dropped, a disconnected number message can be played, or the call can be directed to a voice mail informing the originator that calls placed by them cannot be accepted.

In another example, method 400 can be performed when the call originates from the same network that the receiving cell-phone 50₁ is located on, which is in contrast to the first two example performances of method 400 where the call originated on a different network. To illustrate this, an example is used where the originator is another cell-phone, cell-phone 50₂ in Figure 1. Accordingly, when cell-phone 50₂ attempts to place a call to cell-phone 50₁, method 400 is performed in substantially the same manner as the last two example performances. Specifically, the performance of the first two steps leads to the reception of cell-phone 50₂'s phone number, 647 000-0002, by cell-phone 50₁, and the accessing of CP database 100. When step 430 is performed, a search of CP database 100 reveals that 647 000-0002 is contained within CP database 100 leading to the performance of step 440, namely the rejection of the call.

Although in the previous examples the voice call is received from a PSTN and a cellular phone network, in other examples, method 400 can also be performed using other types of connections such as peer-to-peer links. For example, method 400 can be performed when a voice communication is attempted between two cell-phones through a peer-to-peer link. To illustrate this, consider the example shown in Figure 1 where cell-phone 50₃ attempts to establish voice communications with 50₁ through a peer-to-peer link 54. Accordingly, at step 410, as in the previous three example performances of method 400, the phone number associated with cell-phone 50₃ (647 000-0003), is transmitted to cell-phone 50₁ as part of an attempt to establish a connection with phone 50₁. After CP database 100 is accessed at step 420, and examined at step 430, it is found that 647 000-0003 is not in database 100, and hence, determined that receiving the voice communication from cell-phone 50₃ is permissible. Thus, method 400 advances to step 450 and the voice communication is accepted by cell-phone 50₃ in the usual manner.

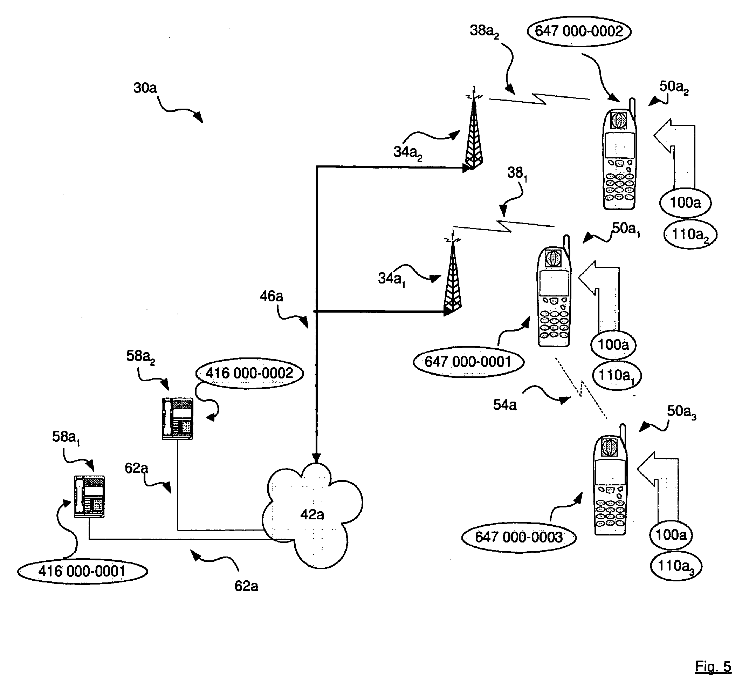

Referring now to Figure 5, a wireless communication system in accordance with another example of the invention is indicated generally at 30a. System 30a is substantially the same as system 30, and like elements in system 30a bear the same reference as like elements in system 30, except followed by the suffix "a". System 30a differs from system 30 in that in system 30a each cell-phone 50a maintains an override policy ("OP") database 110a unique to that cell-phone 50a. In the present example, OP database 110a is an opt-out policy database used for determining whether, for a given call, the common policy contained in CP database 100 should be opted out of.

Referring back to Figure 5, each cell-phone 50a maintains two policies, one in OP database 110a, and the other in CP database 100a. An example CP database 100a is shown above in Table I. Table II shows an example OP database 110a₁ for cell-phone 50a₁ right before an attempt is made, by phone 58a₂, to place a call.

**Table II**

| **Example OP Database 110 for 50a₁** |
|---|
| **Field 1** |
| **OID** |
| 647 000-0002 |

Describing Table II in greater detail, Field 1 contains the unique OID associated with a phone 58a or a cell-phone 50a. In this embodiment, as mentioned above, the OID is the phone number associated with a phone 58a or a cell-phone 50a. If a phone 58a or cell-phone 50a is identified in OP database 110a, the common policy represented by CP database 100a is ignored for that device. For example, although, according to common policy 100a, as shown in Table I, it is impermissible for cell-phones 50a to accept calls placed by phone 58a₂ (which has an OID of 416 000-0002), the same OID is also listed in OP database 110a₁, overriding CP database 100a and making the reception of calls from phone 58a₂ permissible for cell-phone 50a₁.

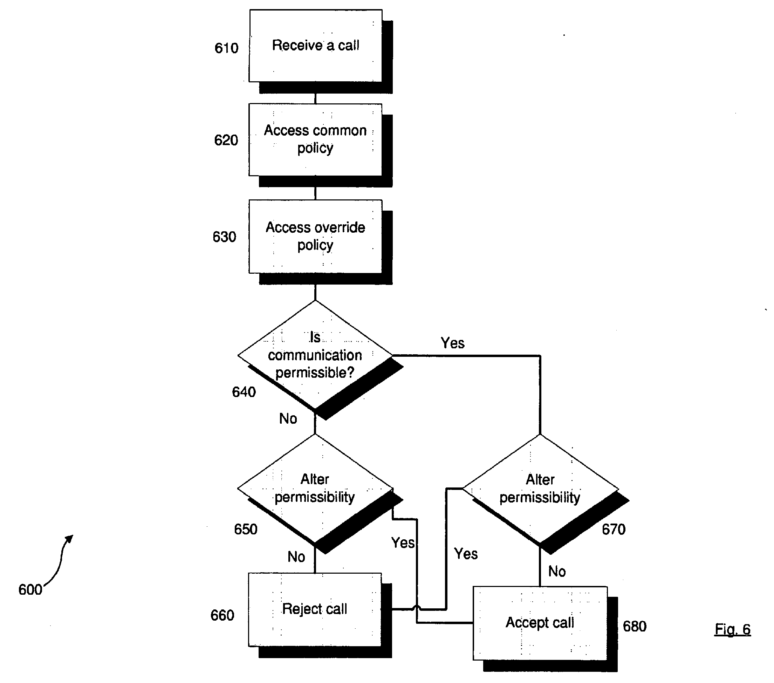

Referring to Figure 6, a method for processing communications in a network having CP database 100a and OP databases 110a is indicated generally at 600. In order to assist in the explanation of the method, it will be assumed that method 600 is operated using system 30a. Furthermore, the following discussion of method 600 will lead to further understanding of system 30a and its various components. (However, it is to be understood that system 30a and/or method 600 can be varied, and need not work exactly as discussed herein in conjunction with each other, and that such variations are within the scope of the present invention).

Similar to the second example performance of method 400 using system 30, the current performance of method 600 is initiated by a call placed by phone 58a₂. Accordingly, the performance of steps 610 and 620 result in the reception of phone 58a₂'s associated phone number and the accessing of CP database 100a. Continuing with the example, at step 630 the override policy is accessed. In this example, step 630 is performed by accessing OP database 110a₁ maintained on cell-phone 50a₁ itself. Method 600 then advances from step 630 to step 640, at which point a determination is made as to whether the received voice call is permissible. In this example, CP database 100a is examined to determine whether calls from 58a₂ are permitted. To perform this step, database 100a is accessed to determine whether the phone number of phone 58a₂, the originator phone, is present in database 100a. In this case, the phone number 416 000-0002 is present in database 100a meaning that accepting a phone call from phone 58a₂ is not permissible. Accordingly, step 650 is performed next.

At step 650, a determination is made whether to alter the permissibility of the call. In this example, OP database 110a is examined to determine whether the common policy for 58a₂ should be ignored. To perform this step, database 110a is examined to determine whether the phone number of phone 58a₂, the originator phone, is present database 110a. In this case, the phone number 416 000-0002 is present in OP database 110a, meaning that the common policy should be ignored, altering the permissibility determined at step 640 to make a phone call from phone 58a₂ permissible. Accordingly, step 680 is performed next.

At step 680 the call is accepted in the usual manner. For example, cell-phone 50a₁'s ringer can be sounded if cell-phone 50a₁ is on, or the call can be directed to a voice mail if cell-phone 50a₁ is off. These and other known manners of accepting a call are within the scope of the invention.

In another embodiment, OP database 110a can represent an opt-in policy used for determining whether, for a given call, the common policy contained in CP database 100a should be followed. For example, according to common policy 100a, as shown in Table I, it is impermissible for cell-phones 50a to accept calls placed by phone 58₂ (which has an OID of 416 000-0002). The same OID is also listed in OP database 110a₁, opting in to the policy contained in CP database 100a and making the reception of calls from phone 58₂ impermissible for cell-phone 50a₁.

Referring back to Figure 6, a second example performance of method 600 will be used to illustrate an embodiment of method 600 where OP database 110a represents an opt-in policy. As in the first Performance of method 600 where OP database 110a represents an opt-out policy, it is assumed that this performance of method 600 is initiated by call placed by phone 58a₂. It should be noted that the performance of method 600, regardless of the type of policy represented by OP database 110a, is the same except for the determination of whether to alter permissibility at steps 650 and 670. Accordingly, the performance of steps 610 through 630 according to this embodiment results in the reception of phone 58a₂'s associated phone number, the accessing of CP database 100a, and the OP database 100a₁.

Method 600 then advances from step 630 to step 640, at which point a determination is made as to whether the received voice call is permissible. In this example, similar to the first performance of method 600, CP database 100a is examined to determine that calls from 58a₂ are not permissible. Accordingly, step 650 is performed next.

At step 650, a determination is made whether to alter the permissibility of the call. In this example, OP database 110a is examined to determine whether the common policy for 58a₂ should be followed. To perform this step, database 110a is searched to determine whether the phone number of phone 58a₂, the originator phone, is present in database 110a; only if OP database 110a also contains the phone number of phone 58a₂, will the common policy making a call from phone 58a₂ impermissible be enforced. In this case, phone number 416 000-0002 is present in OP database 110a, meaning that the common policy should be followed, requiring no alterations to the permissibility determined at step 640. Accordingly, step 660 is performed next.

At step 660 the call is rejected. Specifically, the call placed by phone 58₂ is rejected. Step 660 can be performed in a variety of known ways. For example, the connection can be dropped, or the call can be directed to a voice mail informing the originator that calls placed by them cannot be accepted. These and other known manners of rejecting a call are all within the scope of the invention.

As with method 400, in other embodiments, method 600 can be performed when the call originates from the same network that the receiving cell-phone 50₁ is located on. Moreover, in yet other embodiments, method 600 can also be performed using other types of connections such as peer-to-peer links. All these embodiments are within the scope of the invention.

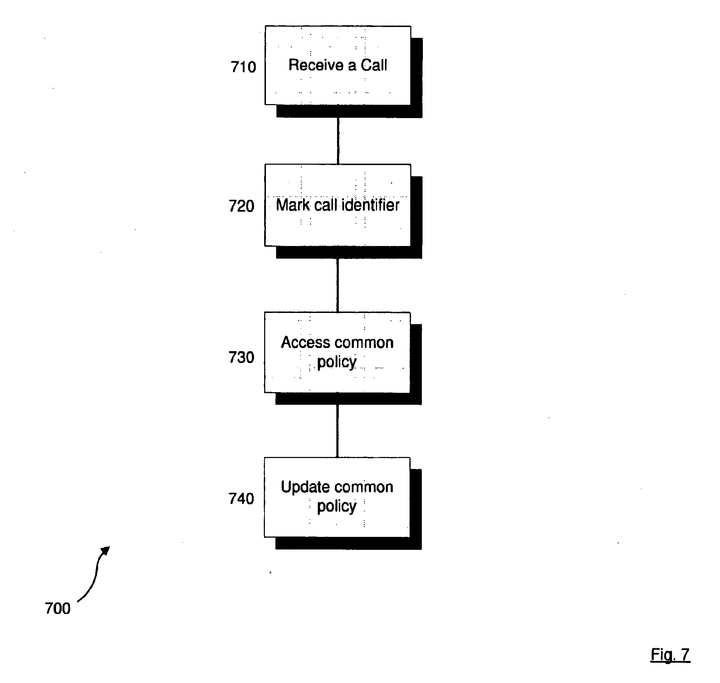

Referring to Figure 7, a method for updating a common communication policy for a network having a plurality of cell-phones is indicated generally at 700. In order to assist in the explanation of the method, it will be assumed that method 700 is operated using system 30, and that, as shown in Figure 1, cell-phone 50₁ is located within range of station 34₁, cell-phone 50₂ is located within in range of station 34₂ and cell-phone 50₃ is located within peer-to-peer range of cell-phone 50₁. In addition, it is assumed that, immediately prior to the performance of Method 700, CP database 100's contents are as shown in Table I above. Furthermore, the following discussion of method 700 will lead to further understanding of system 30 and its various components. (However, it is to be understood that system 30 and/or method 700 can be varied, and need not work exactly as discussed herein in conjunction with each other).

The current performance of method 700 is initiated by a call placed by phone 58₁. Referring back to Figure 7, at step 710 a call is received. Step 710 can be performed, for example, by phone 58₁ dialling the phone number for cell-phone 50₁. Accordingly, an attempt is made, in the usual manner, to create a connection with cell-phone 50₁, through PSTN network 42, and, with the aid of station 34₁, through link 38₁. In the present embodiment, the phone number of phone 58₁, 416 000-0001, is forwarded to cell-phone 50₁ as part of the attempt to establish a connection. In other embodiments, other identifiers which uniquely identify the originator of a call in a phone network, such as the name under which a phone is registered, can also be used.

Continuing with the example, at step 720 the phone number received at step 710 is marked. In this example, the number associated with phone 58₁, 416 000-0001 is marked. Method 700 then advances from step 720 to step 730 where the common communication policy is accessed. In this example, step 730 is performed by accessing CP database 100 maintained on cell-phone 50₁.

Next, at step 740 the common policy is updated with the marked identifier. In this example, CP database 100 is first examined to determine whether the marked number of phone 58₁, the originator phone, is present in CP database 100. In this case, the phone number 416 000-0001 is not present in CP database 100 meaning that accepting a phone call from phone 58₁ is permissible. Accordingly, CP database 100 is updated by inserting the marked number 416 000-0001 such that calls from phone 58₁ are now impermissible according to CP database 100. It should apparent to those skilled in the art that the steps of accessing and updating should not be construed in the limiting sense, and that in other embodiments the two steps could be combined to form one step.

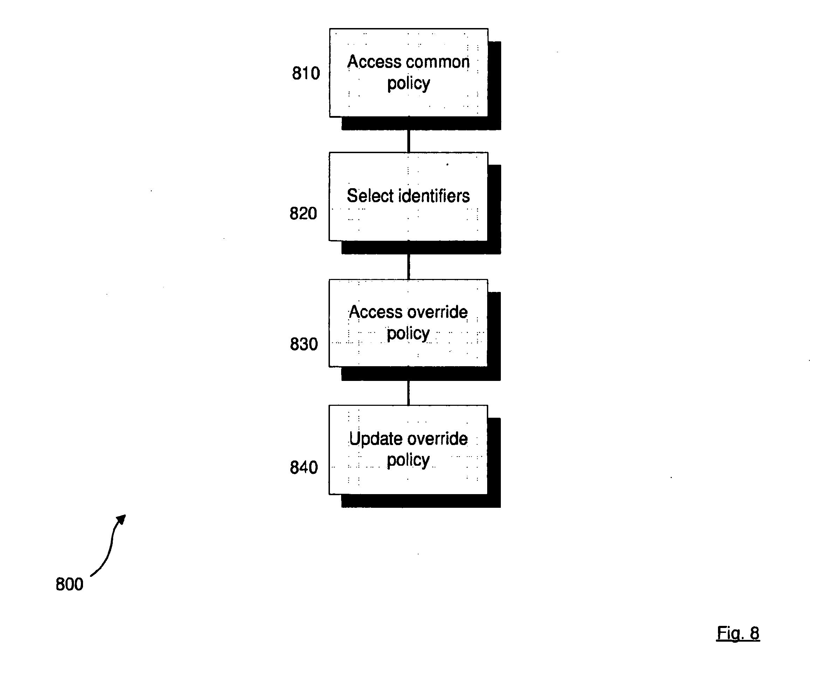

In another embodiment of the invention, as shown in Figure 5 and discussed above, individual cell-phones can maintain override policies for overriding a policy common to all cell-phones. Referring to Figure 8, a method for updating an override policy for an individual cell-phone which is part of a network having a common communication policy is indicated generally at 800. In order to assist in the explanation of the method, it will be assumed that method 800 is operated using system 30a. In addition, it is assumed that, immediately prior to the performance of Method 800, CP database 100a's contents are as shown above in Table I, and OP database 110a's contents are as shown above in Table II. Furthermore, the following discussion of method 800 will lead to further understanding of system 30a and its various components. (However, it is to be understood that system 30a and/or method 600 can be varied, and need not work exactly as discussed herein in conjunction with each other, and that such variations are within the scope of the present invention).

Referring back to Figure 8, at step 810 a common communication policy is accessed. In this example, step 810 is performed on cell-phone 50a₁ by accessing CP database 100a maintained on cell-phone 50a₁.

Next, at step 820 one or more identifiers are selected. In this example, the identifier CP database 100a is first examined to identify the numbers it contains, and following that, 416 000-0002, one of the phone numbers present in CP database 100a, is selected from the list of numbers first identified. Next, at step 830, the override policy is accessed. In this example, step 830 is performed by accessing OP database 110a maintained on cell-phone 50a₁.

Next, at step 840, the override database is updated. In this case, OP database 110a is updated by inserting the selected number 416 000-0002. In one embodiment, the override policy is an opt-out policy. Accordingly, by updating the OP database in step 840 to include 416 000-0002 cell-phone 50a₁ ignores the common policy, and makes calls from phone 58a₂ permissible. In another embodiment, the override policy can be an opt-in policy. Accordingly, by updating the OP database in step 840 to include 416 000-0002 cell-phone 50a₁ follows the common policy, and in accordance with the common policy, receiving calls from phone 58a₂ become impermissible.

While only specific combinations of the various features and components of the present invention have been discussed herein, it will be apparent to those of skill in the art that subsets of the disclosed features and components and/or alternative combinations of these features and components can be utilized, as desired. For example, although GSM and AMPS are wireless communication methods contemplated, it should now be apparent that other wireless communication methods such as the Code Division Multiple Access ("CDMA") for digital connections and the Total Access Communication System ("TACS") for analog connections are all within the scope of the invention. Other methods include General Packet Radio Service ("GPRS"), and Orthogonal Frequency Division Multiplexing ("OFDM"), amongst others. In another variation, wired network of subscriber devices such as PSTN can also be used.

In a further variation, yet other communication methods such as Ethernet and Voice over Internet Protocol (VoIP) could also be used. Moreover, identifiers other than phone numbers and serial numbers can also be used. For example, when employing Ethernet communications, the Internet Protocol (IP) address assigned to each device can be used as an identifier. Alternatively Media Access Control (MAC) address of each device could also be used. In yet other variations, policies could be applied to a group of devices by using an identifier that represents that group of devices. For example, when using IP addresses as identifiers, only the first 24 bits of an IP address could be used to identify 256 devices at a time, applying policies to all of those devices at once through the use of a single identifier.

In another variation it is possible to maintain CP database 100 of system 30 at base stations 34 rather than at cell-phones 50. For example, a cell-phone 50 can be operable to access CP database 100 in system 30 by communicating with a base station 34.

In yet another variation, each cell-phone 50 could maintain a copy of CP database 100, and update its copy when in range of a base station 34. According to this variation, a cell-phone 50's copy of CP database 100 could be updated using different methodologies. For example, the transfer of CP database 100 could be made selectively, transferring the database only when a difference is found between CP database 100 maintained on the base station and the copy maintained on a cell-phone 50. It should now be apparent that a variety of different methods could be employed for determining a difference. For example, each field of CP database 100 can be compared to the equivalent field of the copy maintained on an individual cell-phone 50 to determine whether there are any differences. Alternatively, sizes of the database files or the date of modification of these files could be compared. Moreover, the comparison can be done either by the base station 34, cell-phone 50 or some other computer trusted with maintaining synchronized cp databases between the base stations and the roaming devices. All these methods, and other methods for determining whether a CP database should be transferred to cell-phone 50 are within the scope of this invention.

In another variation, CP database 100 can be updated through a peer-to-peer connection between cell-phones 50. It should now be apparent that this peer-to-peer connection can take the form of a wired connection such as a Universal Serial Bus ("USB") connection, a cross-linked peer-to-peer Ethernet connection, or a wireless connection such as a Bluetooth connection, an infrared (IR) connection, or a peer-to-peer IEEE 801.11b/g connection. In yet another variation, database 120 could be updated through a Local Area Connection ("LAN") to which both cell-phone 50 and at least one base station 34 are connected.

In other variations, the policy can be stored in forms other than a database such as a lookup table. Moreover, the policy can be stored at a computer other than one at base station 34. For example, the policy can be stored on routers and other dedicated computing devices. Also, the policy could be stored on a computer or other electronic device which is operated by an entity other than the office that operates the mobile devices.

In yet another variation, information from other sources besides incoming phone calls can be used for updating CP policy database 100. For example, phone numbers of unwanted callers can be identified from public sources such as web sites, and entered into CP database 100 manually. Moreover, the selection of which numbers to enter into CP database 100 can be done by either users of cell-phones 50, operators of base stations 34, some other third party operator entrusted with maintains CP database 100, or some combination thereof. Furthermore, any entries into CP database 100 made by the user of a cell-phone 50 may be subject to further verification prior to becoming available to all cell-phones 50.

Another variation of the invention could employ different types of subscriber devices in place of cell-phones. It should now be apparent that these subscriber devices can take the form of enhanced personal digital assistants such as those manufactured by Research In Motion Limited of Waterloo, Ontario, Canada, and PalmOne, Inc. of Milpitas, California USA. In yet another variation policies could be used for other communication types besides voice calls, such as text messaging.

While portions of the foregoing description may individually reference systems 30 and 30a, it should now be apparent that all or parts of each of these systems can be combined as appropriate or otherwise desired. Accordingly, those of skill in the art will recognize that when certain references are made to one of these systems, and/or its components, such teachings can also be applicable to other ones of those systems.

The above-described embodiments of the invention are intended to be examples of the present invention and alterations and modifications may be effected thereto, by those of skill in the art, without departing from the scope of the invention which is defined solely by the claims appended hereto.

## Claims

1. A method of processing communications in a network (30a, 42a) having a plurality of subscriber devices (50a); said method comprising the steps of:
maintaining at one or more network devices a policy (100a) common to all subscriber devices (50); said policy (100a) comprising at least one identifier representing whether reception of a voice call having at least one originator identifier is permissible;
maintaining, in at least one of said subscriber devices (50a₁) a local override policy (110a₁) that is unique to said at least one of said subscriber devices (50a₁);
receiving a voice call at said at least one of said subscriber devices (50a₁); said voice call having an originator identifier;
accessing said common policy (100a) by said at least one of said subscriber devices (50a₁);
accessing said local override policy (110a₁) as maintained in said at least one of said subscriber devices (50a₁);
determining a permissibility, on the said at least one of said subscriber devices (50 a₁), as to whether said voice call is permissible according to said common policy (100a) and said local override policy (110a₁) based on said originator identifier of the received voice call; and
accepting or rejecting said received voice call according to said permissibility.

2. The method of claim 1 wherein said determining step comprises the steps of:
determining whether it is permissible to accept said voice call based on said common policy (100a) and said originator identifier of the received voice call; and
altering said permissibility according to said override policy (110a₁).

3. The method of claim 2 wherein said override policy (110 a₁) is an opt-out policy, and said altering step is performed such that said permissibility is altered if said override policy (110a₁) for said identifier is to ignore said common policy (100a).

4. The method of claim 2 wherein said override policy (110 a₁) is an opt-in policy for those calls deemed impermissible according to said common policy (100a), and said altering step is performed such that said permissibility is altered if said override policy (110 a₁) for said identifier is not to follow said common policy (100a).

5. The method of any one of claims 1 to 4 wherein said network (30a, 42a) has at least one server, and said maintaining step is coordinated by said at least one server.

6. The method of any one of claims 1 to 5 wherein said voice call is received over a peer-to-peer connection (54).

7. The method of any one of claims 1 to 6 wherein said network (30a, 42a) is based on one or more of Code Division Multiple Access 'CDMA', Orthogonal Frequency Division Multiplexing 'OFDM', Advanced Mobile Phone System 'AMPS', Global System for Mobile Communications 'GSM', General Packet Radio Service 'GPRS', Bluetooth, infrared, 802.11, and Public Switched Telephone Network 'PSTN'.

8. The method of any one of claims 1 to 7, wherein said local override policy (110a₁) is updated by:
accessing said common policy (100a) by one of said subscriber devices (50a); said common policy (100a) having at least one identifier such that reception by any of said plurality of subscriber devices (50a) of a voice call having one of said at least one identifier is impermissible;
marking at least one of said at least one identifier from said common policy (100a); and
updating said override policy (110a₁) associated with said one subscriber device (50a₁) according to said marked at least one identifier.

9. The method of claim 8 wherein said override policy (110a₁) is an opt-out policy, and said updating said local override policy (110a₁) is performed such that reception of a voice call having said at least one identifier is permissible at said one subscriber device (50 a₁).

10. The method of claim 8 wherein said override policy (110a₁) is an opt-in policy, and said updating said local override policy (110a₁) is performed such that reception of a voice call having said originator identifier is impermissible at said one subscriber device (50a₁).

11. A wireless subscriber device (50a₁) for a communications network (30a, 42a) having a plurality of subscriber devices (50a); said device (50a₁) comprising:
an interface (106) operable to send and receive communications;
a computer (90) connected to said interface (106) for accessing a policy (100a) maintained at one or more network devices; said policy (100a) common to said plurality of subscriber devices (50a); said policy (100a) defining at least one originating identifier from which said computer (90) can determine whether it is permissible for said subscriber device (50a₁) to accept communications; and
storage (98, 102) for maintaining a local override policy (110a₁); said local override policy (110a₁) for overriding at least a portion of said policy (100a);
said computer (90) also connected to said storage (98, 102); said computer (90) configured to access said policy (100a) and said local override policy (110a₁) and to receive an originating identifier of a communication from said interface (106);
said computer (90) permitting said interface (106) to communicate in accordance with said policy (100a) and said local override policy (110a₁) based on said originator identifier of the communication.

12. A computer-readable storage medium (94) containing a set of instructions for an electronic device (50); said set of instructions comprising program code means executable by a processor (90) of the electronic device (50) for implementing the method of any one of claims 1 to 10.

13. A communication system (30, 42) comprising a plurality of wireless subscriber devices (50) according to claim 11.

## Patentansprüche

1. Verfahren zur Verarbeitung von Kommunikationen in einem Netzwerk (30a, 42a) mit mehreren Teilnehmergeräten (50a); wobei das Verfahren folgende Schritte umfasst:
Führen einer allen Teilnehmergeräten (50) gemeinsamen Regel (100a) an einem oder mehreren Netzwerkgeräten; wobei die Regel (100a) mindestens einen Bezeichner umfasst, der darstellt, ob der Empfang eines Sprachanrufs mit mindestens einem Aufgeberbezeichner zulässig ist;
Führen einer lokalen Außerkraftsetzungsregel (110a₁), die eindeutig für das mindestens eine der Teilnehmergeräte (50a₁) ist, in mindestens einem der Teilnehmergeräte (50a₁);
Empfangen eines Sprachanrufs an dem mindestens einen der Teilnehmergeräte (50a₁); wobei der Sprachanruf einen Aufgeberbezeichner aufweist;
Zugreifen auf die gemeinsame Regel (100a) durch das mindestens eine der Teilnehmergeräte (50a₁);
Zugreifen auf die lokale Außerkraftsetzungsregel (110a₁), wie in dem mindestens einen der Teilnehmergeräte (50a₁) geführt;
Bestimmen einer Zulässigkeit in dem mindestens einen der Teilnehmergeräte (50a₁) in Bezug darauf, ob der Sprachanruf gemäß der gemeinsamen Regel (100a) und der lokalen Außerkraftsetzungsregel (100a₁) basierend auf dem Aufgeberbezeichner des empfangenen Sprachanrufs zulässig ist; und
Annehmen oder Ablehnen des empfangenen Sprachanrufs gemäß der Zulässigkeit.

2. Verfahren nach Anspruch 1, wobei der Schritt des Bestimmens folgende Schritte umfasst:
Bestimmen, ob es zulässig ist, den Sprachanruf basierend auf der gemeinsamen Regel (100a) und dem Aufgeberbezeichner des empfangenen Sprachanrufs anzunehmen; und
Ändern der Zulässigkeit gemäß der Außerkraftsetzungsregel (110a₁).

3. Verfahren nach Anspruch 2, wobei die Außerkraftsetzungsregel (110 a₁) eine Verweigerungsregel ist und der Schritt des Änderns so durchgeführt wird, dass die Zulässigkeit geändert wird, wenn die Außerkraftsetzungsregel (110a₁) für den Bezeichner darin besteht, die gemeinsame Regel (100a) zu ignorieren.

4. Verfahren nach Anspruch 2, wobei die Außerkraftsetzungsregel (110a₁) eine Zustimmungsregel für solche Anrufe ist, die als unzulässig gemäß der gemeinsamen Regel (100a) erachtet werden, und der Schritt des Ändems so durchgeführt wird, dass die Zulässigkeit geändert wird, wenn die Außerkraftsetzungsregel (110 a₁) für den Bezeichner darin besteht, die gemeinsame Regel (100a) nicht zu befolgen.

5. Verfahren nach einem der Ansprüche 1 bis 4, wobei das Netzwerk (30a, 42a) über mindestens einen Server verfügt und der Schritt des Führens von dem mindestens einen Server koordiniert wird.

6. Verfahren nach einem der Ansprüche 1 bis 5, wobei der Sprachanruf über eine Peer-to-Peer-Verbindung (54) empfangen wird.

7. Verfahren nach einem der Ansprüche 1 bis 6, wobei das Netzwerk (30a, 42a) auf Code Division Multiple Access 'CDMA' und/oder Orthogonal Frequency Division Multiplexing 'OFDM' und/oder Advanced Mobile Phone System 'AMPS' und/oder Global System for Mobile Communications 'GSM' und/oder General Packet Radio Service 'GPRS' und/oder Bluetooth und/oder infrarot und/oder 802.11 und/oder Public Switched Telephone Network 'PSTN' basiert.

8. Verfahren nach einem der Ansprüche 1 bis 7, wobei die lokale Außerkraftsetzungsregel (110a₁) aktualisiert wird durch:
Zugreifen auf die gemeinsame Regel (100a) durch eines der Teilnehmergeräte (50a); wobei die gemeinsame Regel (100a) mindestens einen Bezeichner aufweist, so dass der Empfang durch beliebige der mehreren Teilnehmergeräte (50a) eines Sprachanrufs mit einem des mindestens einen Bezeichners unzulässig ist; Markieren mindestens eines des mindestens einen Bezeichners von der gemeinsamen Regel (100a); und
Aktualisieren der mit dem einen Teilnehmergerät (50a₁) verknüpften Außerkraftsetzungsregel (110a₁) gemäß dem markierten mindestens einen Bezeichner.

9. Verfahren nach Anspruch 8, wobei die Außerkraftsetzungsregel (110a₁) eine Verweigerungsregel ist und das Aktualisieren der lokalen Außerkraftsetzungsregel (110a₁) so durchgeführt wird, dass der Empfang eines Sprachanrufs mit dem mindestens einen Bezeichner an dem einen Teilnehmergerät (50 a₁) zulässig ist.

10. Verfahren nach Anspruch 8, wobei die Außerkraftsetzungsregel (110a₁) eine Zustimmungsregel ist und das Aktualisieren der lokalen Außerkraftsetzungsregel (110a₁) so durchgeführt wird, dass der Empfang eines Sprachanrufs mit dem Aufgeberbezeichner an dem einen Teilnehmergerät (50a₁) unzulässig ist.

11. Drahtloses Teilnehmergerät (50a₁) für ein Kommunikationsnetzwerk (30a, 42a) mit mehreren Teilnehmergeräten (50a); wobei das Gerät (50a₁) umfasst:
eine Schnittstelle (106), die zum Versenden und Empfangen von Kommunikationen bedienbar ist;
einen mit der Schnittstelle (106) verbundenen Computer (90) zum Zugreifen auf eine an einem oder mehreren Netzwerkgeräten geführte Regel (100a); wobei die Regel (100a) den mehreren Teilnehmergeräten (50a) gemeinsam ist; wobei die Regel (100a) mindestens einen Aufgeberbezeichner definiert, anhand dessen der Computer (90) bestimmen kann, ob das Annehmen von Kommunikationen für das Teilnehmergerät (50a₁) zulässig ist; und einen Speicher (98, 102) zum Führen einer lokalen Außerkraftsetzungsregel (110a₁); wobei die lokale Außerkraftsetzungsregel (110a₁) zum Außerkraftsetzen mindestens eines Teils der Regel (100a) vorgesehen ist; wobei der Computer (90) auch mit dem Speicher (98, 102) verbunden ist; wobei der Computer (90) konfiguriert ist, um auf die Regel (100a) und die lokale Außerkraftsetzungsregel (110a₁) zuzugreifen und einen Aufgeberbezeichner einer Kommunikation von der Schnittstelle (106) her zu empfangen; wobei der Computer (90) zulässt, dass die Schnittstelle (106) gemäß der Regel (100a) und der lokalen Außerkraftsetzungsregel (110a₁) basierend auf dem Aufgeberbezeichner der Kommunikation kommuniziert.

12. Computerlesbares Speichermedium (94), das eine Menge Anweisungen für ein elektronisches Gerät (50) enthält; wobei die Menge Anweisungen Programmcodemittel umfasst, die von einem Prozessor (90) des elektronischen Geräts (50) zum Durchführen des Verfahrens nach einem der Ansprüche 1 bis 10 ausführbar sind.

13. Kommunikationssystem (30, 42), das mehrere drahtlose Teilnehmergeräte (50) gemäß Anspruch 11 umfasst.

## Revendications

1. Un procédé pour traiter des communications dans un réseau (30a, 42a) ayant une pluralité de dispositifs d'abonné (50a) ; ledit procédé comportant les étapes suivantes :
tenir à jour au niveau d'un ou plusieurs dispositif(s) de réseau une politique (100a) commune à tous les dispositifs d'abonné (50) ; ladite politique (100a) comportant au moins un identificateur permettant de savoir si la réception d'un appel vocal ayant au moins un identificateur de donneur d'ordre est permissible ;
tenir à jour, dans au moins un desdits dispositifs d'abonné (50a₁) une politique de priorité locale (110a₁) qui est unique audit au moins un desdits dispositifs d'abonné (50a₁) ;
recevoir un appel vocal au niveau dudit au moins un desdits dispositifs d'abonné (50a₁) ; ledit appel vocal ayant un identificateur de donneur d'ordre ;
accéder à ladite politique commune (100a) par ledit au moins un desdits dispositifs d'abonné (50a₁) ;
accéder à ladite politique de priorité locale (110a₁) telle que tenue à jour dans ledit au moins un desdits dispositifs d'abonné (50a₁) ;
déterminer une permissibilité, sur ledit au moins un desdits dispositifs d'abonné (50a₁), concernant le fait de savoir si ledit appel vocal est permissible d'après ladite politique commune (100a) et ladite politique de priorité locale (110a₁) sur la base dudit identificateur de donneur d'ordre de l'appel vocal reçu ; et
accepter ou refuser ledit appel vocal reçu d'après ladite permissibilité.

2. Le procédé de la revendication 1, où ladite étape de détermination comporte les étapes suivantes :
déterminer s'il est permissible d'accepter ledit appel vocal sur la base de ladite politique commune (100a) et dudit identificateur de donneur d'ordre de l'appel vocal reçu ; et
modifier ladite permissibilité d'après ladite politique de priorité (110a₁).

3. Le procédé de la revendication 2, où ladite politique de priorité (110a₁) est une politique d'exclusion, et ladite étape de modification est réalisée de telle sorte que ladite permissibilité soit modifiée si ladite politique de priorité (110a₁) pour ledit identificateur est d'ignorer ladite politique commune (100a).

4. Le procédé de la revendication 2, où ladite politique de priorité (110a₁) est une politique d'inclusion pour les appels jugés non permissibles d'après ladite politique commune (100a), et ladite étape de modification est réalisée de telle sorte que ladite permissibilité soit modifiée si ladite politique de priorité (110a₁) pour ledit identificateur est de ne pas suivre ladite politique commune (100a).

5. Le procédé de n'importe laquelle des revendications 1 à 4, où ledit réseau (30a, 42a) a au moins un serveur, et ladite étape de tenue à jour est coordonnée par au moins un serveur.

6. Le procédé de n'importe laquelle des revendications 1 à 5, où ledit appel vocal est reçu sur une connexion poste à poste (54).

7. Le procédé de n'importe laquelle des revendications 1 à 6, où ledit réseau (30a, 42a) est basé sur un ou plusieurs élément(s) parmi : Accès multiple par répartition en code (CDMA), multiplexage par répartition orthogonale de la fréquence (OFDM), Système téléphonique mobile perfectionné (AMPS), Système mondial de communication mobile (GSM), Service général de radiocommunication par paquets (GPRS), Bluetooth, infrarouge, 802.11, et Réseau téléphonique public commuté (PSTN).

8. Le procédé de n'importe laquelle des revendications 1 à 7, où ladite politique de priorité locale (110a₁) est mise à jour en :
accédant à ladite politique commune (100a) par un desdits dispositifs d'abonné (50a) ; ladite politique commune (100a) ayant au moins un identificateur de telle sorte que la réception par n'importe quel dispositif parmi ladite pluralité de dispositifs d'abonné (50a) d'un appel vocal ayant un dudit au moins un identificateur soit non permissible ;
marquant au moins un dudit au moins un identificateur de ladite politique commune (100a) ; et
mettant à jour ladite politique de priorité (110a₁) associée audit un dispositif d'abonné (50a₁) d'après ledit au moins un identificateur marqué.

9. Le procédé de la revendication 8, où ladite politique de priorité (110a₁) est une politique d'exclusion, et ladite mise à jour de ladite politique de priorité locale (110a₁) est réalisée de telle sorte que la réception d'un appel vocal ayant ledit au moins un identificateur soit permissible au niveau dudit un dispositif d'abonné (50a₁).

10. Le procédé de la revendication 8, où ladite politique de priorité (110a₁) est une politique d'inclusion, et ladite mise à jour de ladite politique de priorité locale (110a₁) est réalisée de telle sorte que la réception d'un appel vocal ayant ledit identificateur de donneur d'ordre soit non permissible au niveau dudit un dispositif d'abonné (50a₁).

11. Un dispositif d'abonné sans fil (50a₁) pour un réseau de communication (30a, 42a) ayant une pluralité de dispositifs d'abonné (50a) ; ledit dispositif (50a₁) comportant :
une interface (106) utilisable pour envoyer et recevoir des communications ;
un ordinateur (90) connecté à ladite interface (106) pour accéder à une politique (100a) tenue à jour au niveau d'un ou plusieurs dispositif(s) de réseau ; ladite politique (100a) étant commune à ladite pluralité de dispositifs d'abonné (50a) ; ladite politique (100a) définissant au moins un identificateur de donneur d'ordre à partir duquel ledit ordinateur (90) peut déterminer s'il est permissible pour ledit dispositif d'abonné (50a₁) d'accepter des communications ; et un dispositif de stockage (98, 102) pour tenir à jour une politique de priorité locale (110a₁) ; ladite politique de priorité locale (110a₁) pour remplacer au moins une portion de ladite politique (100a) ; ledit ordinateur (90) étant également connecté audit dispositif de stockage (98, 102) ; ledit ordinateur (90) étant configuré pour accéder à ladite politique (100a) et à ladite politique de priorité locale (110a₁) et pour recevoir un identificateur de donneur d'ordre d'une communication de ladite interface (106) ; ledit ordinateur (90) permettant à ladite interface (106) de communiquer conformément à ladite politique (100a) et à ladite politique de priorité locale (110a₁) sur la base dudit identificateur de donneur d'ordre de la communication.

12. Un support de stockage lisible par ordinateur (94) contenant un ensemble d'instructions pour un dispositif électronique (50) ; ledit ensemble d'instructions comportant des moyens de code de programme exécutables par un processeur (90) du dispositif électronique (50) pour implémenter le procédé de n'importe laquelle des revendications 1 à 10.

13. Un système de communication (30, 42) comportant une pluralité de dispositifs d'abonné sans fil (50) selon la revendication 11.
